# EUROPÄISCHE PATENTSCHRIFT

(11) **EP 2 237 065 B1**
(45) Veröffentlichungstag und Bekanntmachung des Hinweises auf die Patenterteilung: **01.02.2012**
(21) Anmeldenummer: 09004764.8
(22) Anmeldetag: 31.03.2009
(51) Int. Cl.: G01S 7/497, G01S 17/42, G01S 7/481

(54) **Optischer Sensor nach dem Laufzeitprinzip**
Optical sensor according to the time-of-flight principle
Capteur optique selon le principe de temps de vol

(43) Veröffentlichungstag der Anmeldung: 06.10.2010
(73) Patentinhaber: Pepperl + Fuchs GmbH, 68307 Mannheim (DE)
(72) Erfinder: Satzky, Uwe, 22455 Hamburg (DE); Tabel, Ernst, 22337 Hamburg (DE)
(74) Vertreter: Schiffer, Axel Martin

(56) Entgegenhaltungen:
- DE-A1- 10 114 362
- DE-A1- 19 706 612
- DE-A1-102004 014 041
- DE-C1- 19 732 776
- US-A- 4 319 332
- US-A1- 2005 279 914

## Beschreibung

Die vorliegende Erfindung betrifft einen optischen Sensor nach dem Laufzeitprinzip nach dem Oberbegriff des Anspruchs 1.

Ein gattungsgemäßer optischer Sensor ist beispielsweise in EP 1 378 763 A1 beschrieben und weist folgende Komponenten auf: Eine Lichtquelle zum Aussenden von Sendelichtpulsen in einen Überwachungsbereich, eine Dreheinrichtung zum Drehen einer Strahlrichtung der Sendelichtpulse um eine quer zur Strahlrichtung orientierte Rotationsachse, einen Detektor zum Nachweisen von Lichtpulsen, die von Objekten im Überwachungsbereich zurückgestrahlt werden, ein Gehäuse zum Trennen eines Sensorinnenraums von der Umgebung mit einer Trennscheibe, die für die Sendelichtpulse und die zurückgestrahlten Lichtpulse durchlässig ist, mit einer Testeinrichtung zum Prüfen einer optischen Durchlässigkeit der Trennscheibe und mit einer Steuer- und Auswerteeinheit zum Ansteuern der Lichtquelle, zum Auswerten der von dem Detektor nachgewiesenen Lichtpulse und zum Bestimmen eines Objektabstands auf Grundlage einer gemessenen Laufzeit von Lichtpulsen, wobei die Steuer- und Auswerteeinheit mit der Testeinrichtung zusammenwirkt.

Wegen der Drehung des Sendelichtstrahls und weil als Lichtquellen in der Regel Laser eingesetzt werden, werden solche Geräte auch als Laserscanner, Laserradar oder zweidimensionale Lasermessgeräte bezeichnet. Sensoren dieser Art werden bisher hauptsächlich in der Industrie für eine Vielzahl unterschiedlicher Aufgabenstellungen eingesetzt. Grundsätzlich ist dabei eine vergleichsweise saubere Umgebung notwendig, da bei zu großen Verschmutzungen, Verunreinigungen oder Witterungseinflüssen, wie Regen oder Schnee, der Sensor nicht messen kann. Gattungsgemäße Geräte werden verwendet zum Navigieren, beispielsweise von Gabelstaplern, wobei dies häufig mit Hilfe von Reflektoren erfolgt, die an definierten Stellen in der Umgebung angebracht sind. Prinzipiell ist aber auch eine Navigation ohne Reflektoren möglich, wobei auch hier die jeweiligen Gegebenheiten der Umgebung in einer Einlernphase in die Auswerteeinheit eingelesen werden.

Weitere Anwendungsmöglichkeiten bestehen für Aufgaben im Bereich der Hinderniserkennung, der Absicherung von Gebäuden, im Personenschutz, der Volumenmessung von Objekten, grundsätzlich also bei allen Problemstellungen, bei denen es in irgendeiner Weise um die Erkennung von Objektkonturen geht.

Eine grundlegende Aufgabenstellung bei optischen Sensoren dieser Art besteht darin, sicherzustellen, dass eine hinreichende Intensität der Sendelichtpulse, die üblicherweise durch einen Laser bereitgestellt werden, die nachzuweisenden Objekte auch tatsächlich trifft. Wenn der Laserstrahl aus irgendeinem Grund übermäßig gedämpft wird oder eventuell ganz ausfällt, so muss dies unbedingt erkannt werden, da andernfalls der Sensor "kein Objekt im Überwachungsbereich" meldet, obwohl tatsächlich ein Objekt oder mehrere Objekte im Überwachungsbereich vorhanden sind.

Die Funktionstüchtigkeit des Lasers selbst kann gut überwacht werden. Eine größere Schwierigkeit entsteht, wenn die Sendelichtpulse noch ein optisches Fenster, wie hier die Trennscheibe, durchlaufen müssen, und diese Trennscheibe im Hinblick auf die Durchlässigkeit nicht die notwendigen Eigenschaften und Anforderungen erfüllt. Dies kann zum Beispiel gegeben sein, wenn die Trennscheibe verschmutzt oder beschädigt, insbesondere gesprungen oder gerissen, ist. Um eine ordnungsgemäße Funktion des optischen Sensors zu gewährleisten, muss deshalb die Transmission durch die Trennscheibe möglichst vollständig überprüft werden. Diese Überprüfung die auch als Transmissionsüberwachung bezeichnet wird, ist zwingend notwendig, um eine Messung sicher durchführen zu können, da der optische Sensor sonst nicht feststellen kann, ob tatsächlich kein nachzuweisendes Objekt vorhanden ist oder ob das gesamte Licht durch Verschmutzung der Trennscheibe absorbiert wird und das eigentliche Objekt tatsächlich übersehen wird.

Im Stand der Technik wird beispielsweise eine gewölbte Trennscheibe verwendet, durch welche Testlicht einer Leuchtdiode so gestrahlt wird, dass das Testlicht an zwei unterschiedlichen Stellen die Trennscheibe durchtritt. Um so eine möglichst lückenlose Überprüfung der Trennscheibe zu gewährleisten, wird dies an mehreren Stellen der Trennscheibe durchgeführt. Gleichwohl ist eine lückenlose Überprüfung, insbesondere über den gesamten Umfangsbereich eines 360°-Sensors, dabei nicht möglich.

Bei dem in EP 1 378 763 A1 beschriebenen optischen Sensor ist auf einer Innenseite der Trennscheibe oder Frontscheibe ein optisches Element, beispielsweise ein Beugungsgitter, angebracht, mit dem ein Teil der Sendelichtpulse auf einen außerhalb des Gehäuses angeordneten Detektor geleitet werden. Mit dieser Vorrichtung kann jedenfalls an der Stelle des optischen Elements eine Verschmutzung oder Beschädigung der Frontscheibe festgestellt werden. Auch hier ist aber eine lückenlose Überprüfung der Trennscheibe nicht möglich.

Als eine **Aufgabe** der Erfindung kann angesehen werden, einen optischen Sensor nach der oben genannten Art zu schaffen, bei dem eine möglichst lückenlose Überprüfung der Trennscheibe möglich ist.

Diese Aufgabe wird durch den optischen Sensor mit den Merkmalen des Anspruchs 1 gelöst.

Bevorzugte Ausgestaltungen des erfindungsgemäßen optischen Sensors werden nachstehend, insbesondere mit Bezug auf die abhängigen Ansprüche und die Figur, beschrieben.

Der optische Sensor der oben angegebenen Art ist erfindungsgemäß dadurch weitergebildet, dass im Sensorinnenraum als Teil der Testeinrichtung mindestens ein Testdetektor vorhanden ist, der auf einem um die Rotationsachse drehbaren Rotor angeordnet ist, dass der Testdetektor auf Durchtrittsbereiche der Trennscheibe ausgerichtet ist, durch welche die Sendelichtpulse und/oder die zurückgestrahlten Lichtpulse hindurchtreten, dass zum Bereitstellen des Testlichts als weiterer Teil der Testeinrichtung eine Testlichtquelle vorhanden ist, die ebenfalls auf dem Rotor angeordnet ist und dass außerhalb des Gehäuses mindestens ein Reflektorelement angeordnet ist, auf welches das Testlicht ausgerichtet ist, und dass der Testdetektor zum Nachweisen von von dem Reflektorelement zurückgestrahltem Testlicht passend positioniert ist.

Als ein erster Kerngedanke der Erfindung kann angesehen werden, einen Testdetektor nicht mehr, wie im Stand der Technik, ortsfest zu positionieren, sondern vielmehr im Sensorinnenraum auf einem drehbaren Rotor anzuordnen.

Sodann wird der Testdetektor im Innern des Sensors auf dem Bereich der Trennscheibe ausgerichtet, durch den die Sendelichtpulse und/oder die zurückgestrahlten Lichtpulse hindurch treten.

Zum Bereitstellen des Testlichts ist eine Testlichtquelle vorhanden, die ebenfalls auf dem Rotor angeordnet ist. Es kann dann eine vergleichsweise einfache Transmissionsmessung mit dem von der Testlichtquelle gelieferten Testlicht durchgeführt werden.

Außerhalb des Gehäuses ist gemäß einer weiteren Grundidee der Erfindung mindestens ein Reflektorelement angeordnet, auf welches das Testlicht ausgerichtet ist und der Testdetektor ist zum Nachweisen von von dem Reflektorelement zurückgestrahltem Testlicht positioniert.

Ein wesentlicher Vorteil der vorliegenden Erfindung kann darin gesehen werden, dass mit Hilfe des rotierenden Testdetektors eine kontinuierliche, und insbesondere auch umlaufende Kontrolle und Überwachung des Durchtrittsbereichs in der Trennscheibe möglich ist.

Die Trennscheibe kann insbesondere umlaufend gebildet sein, das heißt sie erstreckt sich über den gesamten Dreh- oder Scanbereich von 360°.

Ein besonders großer Bereich der Trennscheibe kann im Hinblick auf die optische Durchlässigkeit bei einer besonders bevorzugten Variante des erfindungsgemäßen optischen Sensors überprüft werden, bei der das Testlicht durch die Trennscheibe in einem ersten Bereich vom Sensorinnenraum nach außen austritt und das von dem Reflektorelement zurückgestrahlte Testlicht durch die Trennscheibe in einem von dem ersten Bereich verschiedenen zweiten Bereich von außen in den Sensorinnenraum eintritt. In das tatsächlich vom Testdetektor gemessene Signal gehen dann sowohl die Eigenschaften der Trennscheibe in dem ersten Bereich als auch die Eigenschaften der Trennscheibe in dem zweiten Bereich ein, so dass dieses Messverfahren für beide Bereiche empfindlich ist. Der erste und der zweite Bereich können beispielsweise höhenmäßig zueinander versetzt sein, so dass die jeweiligen Strahlen einen unterschiedlichen Abstand zur Rotationsachse, also zum Rotationszentrum aufweisen. Dies kann auch als zentrischer Versatz bezeichnet werden.

Die Betriebssicherheit des erfindungsgemäßen optischen Sensors kann durch diese Maßnahmen deutlich gesteigert werden.

Als Reflektorelement kann bei einer einfachen Variante ein kreisringförmiger Spiegel oder Segmente davon verwendet werden.

Der oben beschriebene zentrische Versatz, also die Variante, bei der das austretende Licht an einem anderen Ort durch die Trennscheibe hindurch tritt als das wieder eintretende Testlicht, kann besonders unaufwändig und elegant verwirklicht werden, wenn als Reflektorelement ein kreisringförmiges Profil mit dreieckigem Querschnitt oder Segmente davon, insbesondere aus transparentem Kunststoff, verwendet wird. An einem solchen Reflektorprofil wird der Testlichtstrahl wie in einem aus der Optik bekannten Strahlumlenker durch zweimalige interne Reflexion umgelenkt. Der einfallende und der ausfallende Strahl sind dabei gegeneinander versetzt.

Um eine möglichst vollständige Durchstrahlung der Trennscheibe zu erreichen, können zweckmäßig auch Mittel zum Aufweiten des Strahls der Testlichtquelle vorhanden sein. Da die Testlichtquelle und der Testdetektor rotieren, kommt es auf eine Verbreiterung oder Aufweitung in Umlaufrichtung nicht an, sondern nur auf eine Aufweitung in einer Richtung senkrecht dazu. Deshalb kann hierzu der Einsatz von asymmetrischen Linsen oder Zylinderlinsen vorteilhaft sein.

Um Anteile des von dem Reflektorelement zurückgestrahlten Testlichts von Fremdlichtanteilen zu trennen, wird die Testlichtquelle bevorzugt gepulst betrieben.

Grundsätzlich können, um eine möglichst vollständige Überprüfung der Durchlässigkeit der Trennscheibe zu erreichen, auch mehrere Testlichtquellen und/oder mehrere zugeordnete Testdetektoren, beispielsweise auf gegenüberliegenden Seiten des Rotors vorhanden sein.

Bei einer weiteren bevorzugten Variante des erfindungsgemäßen optischen Sensors ist das Reflektorelement unter einer Überkragung des Gehäuses montiert und ist dadurch besonders gut vor mechanischen Beschädigungen und/oder vor Verschmutzung geschützt.

Sensoren der beschriebenen Art sind grundsätzlich bekannt und unterscheiden sich im Wesentlichen im Hinblick auf die Reichweite, den Scanbereich und die jeweils eingesetzte Messwertverarbeitung. Ein besonders wichtiger Unterschied ist der Scanbereich, der bei bekannten Geräten entweder etwa 180°, 270° oder 360° beträgt.

Bei dem zweidimensionalen optischen Sensor der in EP 1 378 763 A1 beschriebenen Art wird ein rotierender Spiegel eingesetzt, um den Laserstrahl in eine Messebene zu reflektieren. Dabei strahlt der Laser in der Rotationsachse und der Empfänger empfängt in derselben Achse das von einem Objekt zurückgestrahlte Laserlicht. Durch den um 45° geneigten Spiegel wird das Licht im Idealfall genau im rechten Winkel in Richtung des Überwachungsbereichs, also der Messebene, beziehungsweise vom Überwachungsbereich in Richtung des Empfängers gespiegelt.

Da diese Anordnungen indes immer geringfügige mechanische Fehlpositionierungen, die auch als optischer Restfehler bezeichnet werden, beinhalten, ist der Einfallswinkel des Laserlichts auf den Spiegel nicht für alle Drehstellungen des Spiegels gleich. Der rotierende Laserstrahl taumelt deshalb um eine auf der Rotationsachse des Spiegels senkrecht stehende Ebene. Man spricht davon, dass der Strahl einen Taumelfehler aufweist. Im Hinblick auf Abhilfen zu diesem Problem stellt die Befestigung des Spiegels im Allgemeinen die größte Schwierigkeit dar. Wenn der Spiegel an der mechanischen Anordnung unten befestigt wird, ist es schwierig, das Laserlicht gleichwohl in der Rotationsachse auf den Spiegel einzustrahlen. Wenn der Spiegel andererseits oben befestigt und aufgehängt wird, entstehen Probleme bei der Befestigung und Anordnung des Antriebs insgesamt, da dies im Allgemeinen über eine Art Galgen durchgeführt werden muss. Dabei entsteht an der Stelle des Galgens, wo die Spannung und die mechanische Halterung für den Motor nach oben geführt wird, eine blinde Stelle und so gestaltete Sensoren sind nicht in der Lage, rundum zu messen, können also nicht über die vollen 360° die Umgebung abscannen.

Bei einem besonders bevorzugten Ausführungsbeispiel des erfindungsgemäßen optischen Sensors sind die Lichtquelle, der Detektor, eine elektronische Baugruppe, die Teil der Steuer- und Auswerteeinheit ist, und ein Spiegel zum Leiten der zurückgestrahlten Lichtpulse auf den Detektor zum gemeinsamen Rotieren auf dem Rotor angeordnet. Dadurch kann mit einfachen technischen Mitteln ein optischer Sensor nach dem Laufzeitprinzip bereitgestellt werden, bei dem ein Scannbereich von 360° ermög licht wird.

Als ein Kerngedanke dieser Variante kann erachtet werden, im Unterschied zum Stand der Technik die Lichtquelle und den Detektor starr zueinander anzuordnen und gemeinsam zu rotieren. Da die Lichtquelle und der Detektor gleichzeitig in einem festen System rotieren, kann kein Taumelfehler entstehen. Hierin liegt ein erster wesentlicher Vorteil der Erfindung.

Ein weiterer wesentlicher Vorteil ist, dass auch die bisher vorhandenen Schwierigkeiten des Antriebs ausgeschlossen sind. Unabhängig davon, wo der Rotor angetrieben wird, stört er in keinem Fall das Messsystem und auch ein blinder Fleck kann ausgeschlossen werden, da über dem Messsystem keine elektrischen oder mechanischen Komponenten angebracht werden müssen.

Eine weitere wichtige Verbesserung besteht außerdem darin, dass durch die Positionierung von Lichtquelle und Detektor auf dem Rotor sehr kompakte Aufbauten möglich sind, und insbesondere lange optische Wege vermieden werden können. Im Vergleich zu bekannten System mit separat rotierenden Spiegeln und räumlich fest angeordneten Sendern und Empfängern können dadurch die optischen Wege dort deutlich verkürzt werden. Insgesamt wird auch deutlich weniger Bauraum benötigt und das Gesamtgerät kann deshalb kleiner gefertigt werden.

Durch den kompakten Aufbau können außerdem die Luftverwirbelungen bei der Rotation reduziert werden und dadurch sind höhere Drehfrequenzen möglich.

Grundsätzlich können die aus dem Überwachungsbereich zurückgestrahlten Lichtpulse mit Hilfe von Linsen auf den Detektor geleitet und fokussiert werden. Bei einer besonders bevorzugten Variante des erfindungsgemäßen Sensors ist als optisches Mittel zum Leiten der von Objekten im Überwachungsbereich zurückgestrahlten Lichtpulse auf den Detektor ein ebenfalls auf dem Rotor montierter Spiegel vorhanden.

Dies ist einerseits mit sehr leichten Komponenten möglich und andererseits können mit einem Spiegel bei geringem Gewicht große numerische Aperturen und damit gute Lichtintensitäten erreicht werden.

Zweckmäßig wird als Spiegel ein Hohlspiegel eingesetzt, wobei mit einem Parabolspiegel besonders gute Fokussierungseigenschaften möglich sind. Ein Bauteil mit geringem Gewicht kann dabei erreicht werden, wenn der Hohlspiegel ein mit einer Beschichtung versehenes Kunststoffformteil ist.

Allgemein ist bei dem erfindungsgemäßen optischen Sensor bevorzugt, wenn die Komponenten so leicht wie möglich gebildet werden und außerdem möglichst nah zur Rotationsachse, also mit möglichst kleinem Trägheitsmoment, angeordnet werden. Höhere Rotationsgeschwindigkeiten und damit höhere Abtastraten der Umgebung sind dann leichter möglich.

Mit dem vorliegend beschriebenen optischen Sensor können Drehfrequenzen deutlich über 50 Hz, also größer als 3000 U/min. erzielt werden.

Zum rotativen Antrieb ist auf dem Rotor zweckmäßig ein Permanentmagnet angeordnet, der durch auf einem Stator angeordnete Spulen angetrieben werden kann. Der Permanentmagnet auf dem Rotor wirkt dabei wie ein Läufer eines Elektromotors.

Grundsätzlich ist es möglich, elektrische Energie über Schleifkontakte vom Stator auf den Rotor zu übertragen. Besonders bevorzugt wird aber die zum Betrieb der Lichtquelle, des Detektors und der Steuer- und Auswerteeinheit notwendige Energie vom Stator auf den Rotor berührungslos zu übertragen. Besonders zweckmäßig kann dies bei einer weiteren bevorzugten Variante des erfindungsgemäßen optischen Sensors dadurch erfolgen, dass bei der zwischen dem Stator und dem Rotor eine Transformatorstrecke zum Übertragen von Energie vom Stator auf den Rotor vorhanden ist. Grundsätzlich kann diese Transformatorstrecke auch zum Übertragen von Informationen genutzt werden. Beispielsweise können Konfigurations- und oder Steuerdaten vom ruhenden Teil, also vom Stator, auf den bewegten Teil, also den Rotor, auf dem jedenfalls Teile der Steuer- und Auswerteeinheit angeordnet sind, übertragen werden. Hierzu reichen grundsätzlich niedrige Datenraten aus.

Auch eine Übertragung der über den Detektor ermittelten Messdaten nach außen könnte grundsätzlich auf elektrischem Weg erfolgen. Da hier aber große Datenmengen anfallen, ist besonders zweckmäßig, wenn zum Übertragen von Daten vom Rotor auf den Stator zwischen Rotor und Stator eine optische Übertragungsstrecke gebildet ist. Prinzipiell kann es sich hierbei um eine Übertragungsstrecke handeln, welche einen Datentransport nur in einer Richtung, nämlich vom Rotor auf den Stator ermöglicht. Auf dem Stator ist hierzu mindestens eine geeignete Lichtquelle, beispielsweise eine Leuchtdiode, vorhanden, deren modulierte Signale von einer oder mehreren auf dem Stator geeignet positionierten Photodiode oder Photodioden nachgewiesen werden. Grundsätzlich kann diese optische Übertragungsstrecke auch zum bidirektionalen Datenaustausch ausgebildet sein, wobei dann auf beiden Seiten jeweils mindestens eine Lichtquelle und mindestens ein Photodetektor vorhanden sind.

Besonders elegant und unaufwändig kann eine solche optische Übertragungsstrecke auf der Rotationsachse des Rotors verwirklicht sein.

Ein besonders kompakter Aufbau und eine besonders achsnahe Anordnung der verschiedenen Komponenten wird bei einer weiteren bevorzugten Ausgestaltung der Erfindung ermöglicht, bei der in dem Kunststoffformteil, in welchem der Spiegel gebildet ist, Aufnahmen gebildet sind, in denen die Lichtquelle, der Detektor, die Testlichtquelle, der Testdetektor und/oder die elektronische Baugruppe der Steuer- und Auswerteeinheit aufgenommen sind.

Weitere Vorteile und Merkmale des erfindungsgemäßen optischen Sensors werden nachstehend mit Bezug auf die beigefügte Figur beschrieben.

### Hierin zeigt:

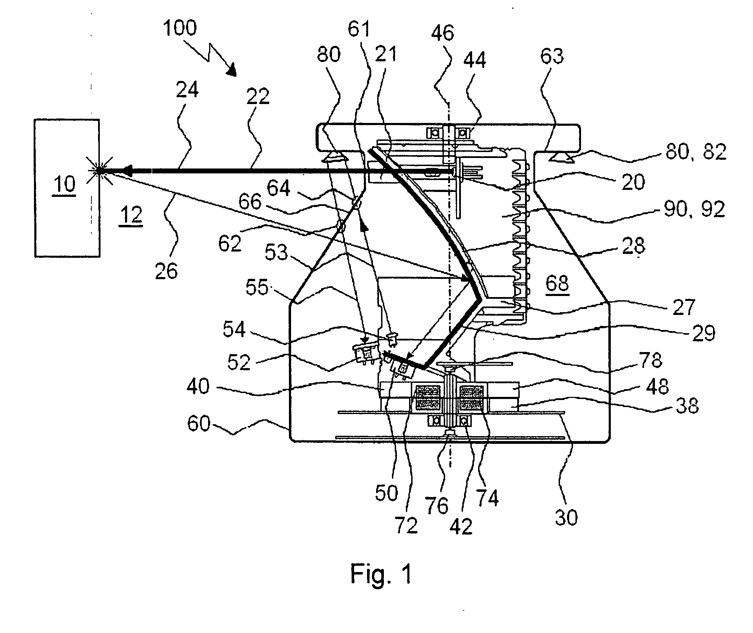

- Fig. 1:: ein Ausführungsbeispiel eines erfindungsgemäßen optischen Sensors.

Ein Ausführungsbeispiel eines erfindungsgemäßen optischen Sensors 100 wird mit Bezug auf Fig. 1 im Einzelnen beschrieben. Der dort schematisch gezeigte erfindungsgemäße optische Sensor 100 weist als wesentliche Komponenten eine Lichtquelle 20, einen Detektor 50 und eine elektronische Baugruppe 92 auf, die Teil einer Steuer- und Auswerteeinheit 90 ist. Weiterhin ist ein Hohlspiegel 28 vorhanden, der als Beschichtung 29 auf einem Kunststoffformteil 27 gebildet ist. In diesem Kunststoffformteil 27 sind über geeignete Aufnahmen, die in der Fig. 1 nicht im Einzelnen gezeigt sind, auch die Lichtquelle 20, der Detektor 50 und die elektronische Baugruppe 92 aufgenommen.

Das Kunststoffformteil 27 ist mit den daran angeordneten Komponenten auf einem Rotor 40 montiert, der gegenüber einem Stator 30 drehbar angeordnet ist. Der gesamte Aufbau ist in einem Gehäuse 60 mit flaschenförmigem Profil untergebracht, wobei der Rotor 40 mit Hilfe von Kugellagern 42, 44 bezüglich einer Rotationsachse 46 drehbar ist. Auf dem Rotor 40 ist außerdem ein Permanentmagnet 48 fest montiert, der über auf dem Stator 30 angeordnete Spulen 38 nach dem Prinzip eines Elektromotors angetrieben werden kann. Zum Übertragen von Energie vom Stator 30 auf den Rotor 40 ist durch Spulen 72, 74 eine Transformatorstrecke gebildet. Über diese Transformatorstrecke können grundsätzlich, wenn auch mit nur vergleichsweise geringer Datenrate, beispielsweise Konfigurations- und/oder Steuerdaten an die Lichtquelle 20, den Detektor 50 und/oder die elektronische Baugruppe 92 übertragen werden.

Das Gehäuse 60, das auch als Haube bezeichnet werden kann, dient einerseits dazu, einen Sensorinnenraum 68 von der Umgebung zu trennen und insbesondere vor Verschmutzung und mechanischer Beschädigung zu schützen. Ein weiterer Zweck des Gehäuses 60 ist, Bedienpersonen vor einer Gefährdung durch den rasch, beispielsweise mit Drehfrequenzen von über 3000 Umdrehungen pro Minute rotierenden Rotor 40 zu schützen.

Zum Übertragen von Daten von dem rotierenden Teil auf den Stator ist eine axial, also auf der Rotationsachse 46 angeordnete optische Übertragungsstrecke durch eine Leucht- oder Laserdiode 78 und eine Photodiode 76 gebildet. Die Datenrate über die optische Übertragungsstrecke vom Rotor auf den Stator beträgt beispielsweise 100 MBaud.

Das Gehäuse 60 weist eine Trennscheibe 66 auf, die auch als transparenter Bereich bezeichnet werden kann. Bei der Trennscheibe 66 muss es sich nicht um ein separates Bauteil handeln, sondern sie kann, wie im gezeigten Beispiel, in einem Stück mit dem restlichen Gehäuse 60 gebildet sein. Wesentlich ist hierfür nur, dass das Gehäuse 60 wenigstens in einem Austrittsbereich 61, in dem Lichtpulse 22 der Lichtquelle 20 nach außen gelangen müssen, und außerdem in Bereichen 62, 64, in denen von einem Objekt 10 zurückgestrahlte Lichtpulse 26 zurück in den Sensorinnenraum 68 gelangen müssen, für die verwendeten Wellenlängen transparent ist. Im gezeigten Beispiel wird eine Laserdiode verwendet, welche bei 660 nm, also im dunkelroten Bereich, emittiert. Um sicherzustellen, dass die Trennscheibe 66 hinreichend sauber ist, also eine ausreichende optische Durchlässigkeit gegeben ist, sind auf dem Rotor 40 außerdem eine Testlichtquelle 54, wobei es sich im gezeigten Beispiel um eine Leuchtdiode handelt, und ein Testdetektor 52 angeordnet. Die Testlichtquelle 54 und der Testdetektor 52 können insbesondere ebenfalls in Aufnahmen positioniert sein, die in dem Kunststoffformteil 27 gebildet sind. Prinzipiell können zum Fokussieren des Testlichts auf den Testdetektor 52 geeignete optische Mittel, beispielsweise Linsen, vorhanden sein.

Die Testlichtquelle 54 ist so positioniert, dass ausgesandtes Testlicht 53 in einem ersten Bereich 64 durch die Trennscheibe 66 hindurchtritt und sodann auf ein Reflektorelement 80 trifft, von welchem es umgelenkt und zurück in Richtung des Gehäuses 60 gestrahlt wird. Im gezeigten Beispiel handelt es sich bei dem Reflektorelement um ein kreisringförmiges Profil 82 mit dreieckigem Querschnitt, welches aus einem transparenten Kunststoff gefertigt ist. Wie in Fig. 1 schematisch andeutet, wird das Testlicht 53 durch das Reflektorelement 80 durch zweimalige interne Reflektion um 180° umgelenkt, wobei das zurückgestrahlte Testlicht 55, der Geometrie des Reflektorelements 80 entsprechend, geringfügig zentrisch nach außen versetzt ist. Das zurückgestrahlte Testlicht 55 tritt in einem zweiten Bereich 62 wieder in den Sensorinnenraum 68 ein und gelangt sodann auf den hierzu geeignet positionierten Testdetektor 52, der dieses Testlicht 55 nachweist. Wenn nun die Oberflächen der Trennscheibe 66 verschmutzt sind oder die Trennscheibe 66 beschädigt, beispielsweise gerissen oder gesprungen, ist, wird dies durch den Testdetektor 52 als reduzierte Intensität des Testlichts festgestellt. Die vom Testdetektor 52 gemessene Intensität des Testlichts 53, 55 wird in der Steuer- und Auswerteeinheit 90 ausgewertet und in dem Fall, dass die gemessenen Intensitäten unter einem festzulegenden Schwellenwert liegen, werden die dann gewonnenen Messdaten bei der Auswertung nicht berücksichtigt.

Ein wichtiger Vorteil des hier beschriebenen optischen Sensors 100 ist, dass die Überwachung der Frontscheibe 66 umlaufend erfolgen kann, prinzipiell also über den vollständigen Winkelbereich von 360°, da sich die Testquelle 54 ebenso wie der Testdetektor 52 auf dem Rotor 40 befinden und im Betrieb des Sensors 100 mitrotie-ren. Der erste Bereich 64 und der zweite Bereich 62 fallen deshalb je nach Drehzustand des Rotors 40 auf jeweils andere Stellen der Frontscheibe 66. Ein weiterer wesentlicher Vorteil ist darin zu sehen, dass der erste Bereich 64 und der zweite Bereich 62 nicht zusammenfallen und somit ein besonders großer Bereich der Trennscheibe 66 bei der Auswertung im Hinblick auf eventuelle Verschmutzungen berücksichtigt wird.

Ein weiterer Vorteil der vorliegenden Erfindung ist, dass die Trennscheibe 66 nicht mehr gewölbt gebildet sein muss. Da die Lichtquelle 20 deshalb praktisch direkt vor einem Austrittsbereich 61 des Gehäuses 60 positioniert werden kann, können praktisch keine inneren Reflexionen in der Region des Austrittsbereichs 61 der Sendelichtpulse 22 entstehen. Eine Eigenblendung ist deshalb ausgeschlossen. Insbesondere kann die Trennscheibe 66 in einfacher Zylinderform gebildet werden.

Um zu verhindern, dass Sendelichtpulse 22 in anderer Weise als durch Rückstrahlung von einem Objekt 10 auf den Detektor 50 gelangen, ist die Lichtquelle 20 in einem Rohr 21 versenkt, welches ebenfalls an dem Kunststoffformteil 27 angeformt ist.

Ein weiteres Detail des in Fig. 1 dargestellten optischen Sensors besteht darin, dass das kreisringförmige Profil 82, welches das Reflektorelement 80 bildet, unterhalb einer Überkragung 63 des Gehäuses 60 montiert ist und dadurch besonders gut vor mechanischer Einwirkung und somit vor Beschädigung von außen geschützt ist.

Prinzipiell wird bei der beschriebenen Transmissionskontrolle vom Boden her oder von der oberen Ebene des Rotors ein Testlichtstrahl schräg durch die im Wesentlichen zylindrische Außentrennscheibe, die auch als transparenter Bereich bezeichnet wird, gesendet. Dieser Strahl trifft oben oder unten auf das Reflexionsmittel, beispielsweise den kreisringförmigen Spiegel oder das kreisringförmige Profil, und wird parallel versetzt zurückgesendet. Dadurch wird die Trennscheibe an zwei Stellen im Hinblick auf eine mögliche Verschmutzung untersucht. Das bedeutet, dass die gemessenen Entfernungsdaten nur dann als gültig bewertet werden, wenn beide Bereiche, durch welche das Testlicht durchdringt, hinreichend sauber sind.

Der erfindungsgemäße optische Sensor arbeitet wie folgt: Die Lichtquelle 20 arbeitet prinzipiell ähnlich wie bekannte Laserpointer und sendet beispielsweise pro Sekunde 250.000 Sendelichtpulse 22 bei einer Wellenlänge von 660 nm, also im dunkelroten Spektralbereich, aus. Mit Hilfe einer nicht im Detail gezeigten Kollimatoroptik werden die Sendelichtpulse 22 dabei zu einem parallelen Strahlenbündel kollimiert. Im gezeigten Beispiel werden die Sendelichtpulse 22 in einer Strahlrichtung 24 ausgesandt, die bezüglich der Rotationsachse 46 des optischen Sensors 100 senkrecht orientiert ist. Wenn die Sendelichtpulse 22 auf ein Objekt 10 im Überwachungsbereich 12 treffen, werden sie von diesem Objekt 10 als Lichtpulse 26 zurückgestrahlt und gelangen durch die Frontscheibe 66 zurück in den Sensorinnenraum 68 und dort auf den Hohlspiegel 28. Der Detektor 50 ist relativ zum Hohlspiegel 28 so positioniert, dass die zurückgestrahlten Lichtpulse 26 möglichst vollständig in dem Detektor 50 nachgewiesen werden können.

Die Steuer- und Auswerteeinheit 90, die in Fig. 1 nicht in weiteren Details dargestellt ist und von der sich insbesondere auch Teile außerhalb des Gehäuses 60 befinden können, steuert die Lichtquelle 20 an, wertet die von dem Detektor 50 nachgewiesenen Lichtpulse 26 aus und ermittelt aus den gemessenen Laufzeiten einen Abstand eines nachgewiesenen Objekts 10. Durch Rotation der Strahlrichtung 24 der Sendelichtpulse 22 wird sodann die Strahlrichtung 24 in einer Ebene bewegt und der erfindungsgemäße optische Sensor 100 kann auf diese Weise ein Profil seiner Umgebung aufnehmen.

Ein weiterer wesentlicher Vorteil der hier beschriebenen Variante des erfindungsgemäßen optischen Sensors besteht darin, dass durch die gemeinsame Anordnung von Lichtquelle, Spiegel, Detektor und Auswerteelektronik auf dem Rotor besonders kompakte und insbesondere achsnahe Anordnungen möglich sind. Durch diese Einheit von Sender, Spiegel, Empfänger und Elektronik können Luftumwirbelungen, die einen begrenzenden Faktor für die maximal zu erreichenden Rotationsgeschwindigkeiten darstellen, deutlich reduziert werden.

Dadurch sind höhere Drehgeschwindigkeiten möglich, so dass bei Navigationsanwendungen die jeweilige Umgebung mit größerer Messrate erfasst werden kann. Dies ist besonders wichtig für Anwendungen, bei denen sich die zu navigierenden oder zu steuernden Geräte oder Fahrzeuge vergleichsweise rasch bewegen. Wenn hierbei die Messdaten über die Umgebung mit nur geringer Rate bereitgestellt werden können, führt dies dazu, dass sich die Position des zu navigierenden Fahrzeugs zwischen zwei Messungen bereits deutlich geändert hat. Die hierbei entstehenden Effekte werden auch als Raumverzerrungen bezeichnet. Diese können zwar prinzipiell zurückgerechnet werden, hierfür sind jedoch zusätzliche Sensoren, beispielsweise Geschwindigkeitssensoren oder Winkelsensoren in der Art eines Kompasses, notwendig.

Mit Hilfe des erfindungsgemäßen optischen Sensors kann aufgrund der gesteigerten Drehgeschwindigkeit auf diese zusätzlichen Sensoren für eine Vielzahl von Anwendungen verzichtet werden und dadurch sind erhebliche Kostenreduzierungen möglich.

Eine weitere Anwendungsmöglichkeit ergibt sich für die erfindungsgemäßen Sensoren im Bereich der Verkehrsüberwachung zur Mautberechnung. Ein erfindungsgemäßer optischer Sensor könnte beispielsweise auf einer Brücke montiert werden und die Profile oder Konturen der unter der Brücke hindurchfahrenden Fahrzeuge ermitteln. Da diese Profile für die unterschiedlichen Fahrzeugtypen zumeist sehr kennzeichnungskräftig sind, kann so ermittelt werden, zu welchem Zeitpunkt ein bestimmter Fahrzeugtyp die fragliche Brücke passiert hat.

Mit der vorliegenden Erfindung wird ein neuartiger zweidimensionaler optischer Messsensor nach dem Laufzeitprinzip beschrieben, bei dem in besonders eleganter Weise eine kontinuierliche und insbesondere auch umlaufende Kontrolle und Überwachung der Transmission eines Durchtrittsbereichs in der Trennscheibe realisiert werden kann. Dies wird durch eine rotierende Testeinrichtung mit einem Testdetektor und einer Testlichtquelle ermöglicht. Ein weiteres wesentliches Merkmal des hier beschriebenen optischen Sensors ist, dass kein unabhängig rotierender Spiegel vorhanden ist, dessen Halterung eine blinde Stelle erzeugen würde. Bei dem hier beschriebenen optischen Sensor dreht sich die komplette Messeinheit, also ein Einheit, die die Lichtquelle, den Detektor, den Spiegel und Teile der Messelektronik beinhaltet. Dadurch ist mit einfachen Mitteln eine Überwachung des gesamten Drehbereichs von 360° möglich. Die für die Lichtquelle, den Detektor und die Elektronik notwendige Energie wird kontaktlos vom Stator auf den Rotor, der auch als Messkopf bezeichnet wird, übertragen. Ebenso erfolgt die Datenübertragung vom Rotor auf den stehenden Teil des Sensors, der auch als Stator bezeichnet wird, berührungslos, insbesondere über eine optische Übertragungsstrecke.

## Patentansprüche

1. Optischer Sensor nach dem Laufzeitprinzip
mit einer Lichtquelle (20) zum Aussenden von Sendelichtpulsen (22) in einen Überwachungsbereich (12),
mit einer Dreheinrichtung zum Drehen einer Strahlrichtung (24) der Sendelichtpulse (22) um eine quer zur Strahlrichtung (24) orientierte Rotationsachse (46),
mit einem Detektor (50) zum Nachweisen von Lichtpulsen (26), die von Objekten (10) im Überwachungsbereich (12) zurückgestrahlt werden,
mit einem Gehäuse (60) zum Trennen eines Sensorinnenraums (68) von der Umgebung mit einer Trennscheibe (66), die für die Sendelichtpulse (22) und die zurückgestrahlten Lichtpulse (26) durchlässig ist,
mit einer Testeinrichtung (54, 80, 52) zum Prüfen einer optischen Durchlässigkeit der Trennscheibe (66) und
mit einer Steuer- und Auswerteeinheit (90) zum Ansteuern der Lichtquelle (20), zum Auswerten der von dem Detektor (50) nachgewiesenen Lichtpulse (26) und zum Bestimmen eines Objektabstands auf Grundlage einer gemessenen Laufzeit von Lichtpulsen (22, 26), wobei die Steuer- und Auswerteeinheit (90) mit der Testeinrichtung (54, 80, 52) zusammenwirkt,
**dadurch gekennzeichnet,**
**dass** im Sensorinnenraum (68) als Teil der Testeinrichtung mindestens ein Testdetektor (52) vorhanden ist, der auf einem um die Rotationsachse (46) drehbaren Rotor (40) angeordnet ist,
**dass** der Testdetektor (52) auf Durchtrittsbereiche (61, 62, 64) der Trennscheibe (66) ausgerichtet ist, durch welche die Sendelichtpulse (22) und/oder die zurückgestrahlten Lichtpulse (26) hindurchtreten,
**dass** zum Bereitstellen des Testlichts (53) als weiterer Teil der Testeinrichtung eine Testlichtquelle (54) vorhanden ist, die ebenfalls auf dem Rotor (40) angeordnet ist,
**dass** außerhalb des Gehäuses (60) mindestens ein Reflektorelement (80) angeordnet ist, auf welches das Testlicht (53) ausgerichtet ist, und
**dass** der Testdetektor (52) zum Nachweisen von von dem Reflektorelement (80) zurückgestrahltem Testlicht (55) positioniert ist.

2. Sensor nach Anspruch 1,
**dadurch gekennzeichnet,**
**dass** das Testlicht (53) durch die Trennscheibe (66) in einem ersten Bereich (64) vom Sensorinnenraum (68) nach außen austritt und
**dass** das von dem Reflektorelement (80) zurückgestrahlte Testlicht (55) durch die Trennscheibe (66) in einem von dem ersten Bereich (64) verschiedenen zweiten Bereich (62) von außen in den Sensorinnenraum (68) eintritt.

3. Sensor nach Anspruch 1 oder 2,
**dadurch gekennzeichnet,**
**dass** die Testlichtquelle (54) zum gepulsten Betrieb eingerichtet ist.

4. Sensor nach einem der Ansprüche 1 bis 3,
**dadurch gekennzeichnet,**
**dass** das Reflektorelement (80) ein kreisringförmiger Spiegel ist.

5. Sensor nach einem der Ansprüche 1 bis 4,
**dadurch gekennzeichnet,**
**dass** das Reflektorelement (80) ein kreisringförmiges Profil (82) mit dreieckigem Querschnitt, insbesondere aus transparentem Kunststoff, ist.

6. Sensor nach einem der Ansprüche 1 bis 5,
**dadurch gekennzeichnet,**
**dass** das Reflektorelement (80) unter einer Überkragung (63) des Gehäuses (60) montiert ist.

7. Sensor nach einem der Ansprüche 1 bis 6,
**dadurch gekennzeichnet,**
**dass** Mittel zum Aufweiten eines Strahls der Testlichtquelle (54) vorhanden sind.

8. Sensor nach einem der Ansprüche 1 bis 7,
**dadurch gekennzeichnet,**
**dass** die Lichtquelle (20), der Detektor (50), eine elektronische Baugruppe (92), die Teil der Steuer- und Auswerteeinheit (90) ist, und ein Spiegel (28) zum Leiten der zurückgestrahlten Lichtpulse (26) auf den Detektor (50) zum gemeinsamen Rotieren auf dem Rotor (40) angeordnet sind.

9. Sensor nach Anspruch 8,
**dadurch gekennzeichnet,**
**dass** der Spiegel (28) ein Hohlspiegel (28), insbesondere ein Parabolspiegel, ist.

10. Sensor nach Anspruch 8 oder 9,
**dadurch gekennzeichnet,**
**dass** der Spiegel (28) ein mit einer Beschichtung (29) versehenes Kunststoffformteil (27) ist.

11. Sensor nach Anspruch 10,
**dadurch gekennzeichnet,**
**dass** in dem Kunststoffformteil (27) Aufnahmen gebildet sind, in denen die Lichtquelle (20), der Detektor (50), die Testlichtquelle (54), der Testdetektor (52) und/oder die elektronische Baugruppe (92) aufgenommen sind.

12. Sensor nach einem der Ansprüche 1 bis 11,
**dadurch gekennzeichnet,**
**dass** auf dem Rotor (40) ein Permanentmagnet (48) angeordnet ist, der durch auf einem Stator (30) angeordnete Spulen (38) antreibbar ist.

13. Sensor nach Anspruch 12,
**dadurch gekennzeichnet,**
**dass** zwischen dem Stator (30) und dem Rotor (40) eine Transformatorstrecke (72, 74) zum Übertragen von Energie vom Stator (30) auf den Rotor (40) vorhanden ist.

14. Sensor nach Anspruch 12 oder 13,
**dadurch gekennzeichnet,**
**dass** zum Übertragen von Daten vom Rotor (40) auf den Stator (30) zwischen Rotor (40) und Stator (30) eine optische Übertragungsstrecke (76, 78), insbesondere auf der Rotationsachse (46), gebildet ist.

15. Sensor nach einem der Ansprüche 1 bis 14,
**dadurch gekennzeichnet,**
**dass** eine Mehrzahl von Testdetektoren und/oder einer Mehrzahl von zugeordneten Testlichtquellen, insbesondere auf gegenüberliegenden Seiten des Rotors (40), vorhanden sind.

## Claims

1. An optical sensor based on the transit time principle
comprising a light source (20) for the emission of emergent light pulses (22) into an observed region (12),
comprising a rotating device for rotating a beam direction (24) of said emergent light pulses (22) about a rotation axis (46) orientated transversaly to said beam direction (24)
comprising a detector (50) for the detection of light pulses (26) reflected by objects (10) in the observed region (12),
comprising a housing (60) for keeping the sensor interior (68) separate from the environment and including a partitioning screen (66) that is transparent to said emergent light pulses (22) and to said reflected light pulses (26),
comprising a test device (54, 80, 52) for testing a translucence of said partitioning screen (66) and
comprising a control and evaluation unit (90) for controlling the light source (20), for evaluating the light pulses (26) detected by said detector (50) and for determining a distance away of an object on the basis of a measured transit time of said light pulses (22, 26), which control and evaluation unit (90) cooperates with said test device (54, 80, 52),
**characterized in that**
at least one test detector (52) is provided in the sensor interior (68) to form part of said test device, which test detector is mounted on a rotor (40) adapted to rotate about the rotation axis (46),
that said test detector (52) is oriented toward those throughput regions (61, 62, 64) of said partitioning screen (66) through which the emergent light pulses (22) and/or the reflected light pulses (26) pass,
that a test light source (54) for supplying the test light (53) is provided as a further part of said test device, which test light source is likewise mounted on said rotor (40),
that outside said housing (60) there is arranged at least one reflector element (80) to which the test light (53) is directed, and
that said test detector (52) is positioned such that it can detect the test light (55) reflected by said reflector element (80).

2. The sensor as defined in claim 1,
**characterized in that**,
said test light (53) passes from the sensor interior (68) outwardly through said partitioning screen (66) in a first region (64) thereof and
that the test light (55) reflected by said reflector element (80) passes from outside inwardly to the sensor interior (68) through said partitioning screen (66) in a second region (62) which differs from said first region (64).

3. The sensor as defined in claim 1 or claim 2,
**characterized in that**
said test light source (54) is adapted for pulsed operation.

4. The sensor as defined in any one of claims 1 to 3,
**characterized in that**
said reflector element (80) is a circular annular mirror.

5. The sensor as defined in any one of claims 1 to 4,
**characterized in that**
said reflector element (80) is a circular annular profile (82), particularly of transparent plastics material, having a triangular cross-section.

6. The sensor as defined in any one of claims 1 to 5,
**characterized in that**
said reflector element (80) is mounted below an overhang (63) of said housing (60).

7. The sensor as defined in any one of claims 1 to 6,
**characterized in that**
means for broadening a beam of said test light source (54) are provided.

8. The sensor as defined in any one of claims 1 to 7,
**characterized in that**
said light source (20), said detector (50), an electronic assembly (92), forming part of said control and evaluation unit (90), and a mirror (28) for guiding the reflected light pulses (26) to said detector (50) are arranged for joint rotation on said rotor (40).

9. The sensor as defined in claim 8,
**characterized in that**
said mirror (28) is a concave mirror (28) and more particularly a parabolic mirror.

10. The sensor as defined in claim 8 or 9,
**characterized in that**
said mirror (28) is a molded plastic part (27) provided with a coating (29).

11. The sensor as defined in claim 10,
**characterized in that**
accommodating means are formed in said molded plastic part (27) in which said light source (20), said detector (50), said test light source (54), said test detector (52), and/or said electronic assembly (92) are accommodated.

12. The sensor as defined in any one of claims 1 to 11,
**characterized in that**
on said rotor (40) is arranged a permanent magnet (48) capable of being driven by coils (38) located on a stator (30).

13. The sensor as defined in claim 12,
**characterized in that**
between said stator (30) and said rotor (40) there is provided a transformer link (72, 74) for the transfer of energy from said stator (30) to said rotor (40).

14. The sensor as defined in claim 12 or claim 13,
**characterized in that**
for the transfer of data from said rotor (40) to said stator (30) there is provided an optical transmission route (76, 78) between said rotor (40) and said stator (30), in particular along said rotation axis (46).

15. The sensor as defined in any one of claims 1 to 14,
**characterized in that**
a plurality of test detectors and/or a plurality of assigned test light sources are provided, in particular at opposed sites of said rotor (40).

## Revendications

1. Capteur optique selon le principe du temps de vol,
avec une source de lumière (20) pour envoyer des impulsions lumineuses émises (22) dans une zone de surveillance (12),
avec un dispositif de rotation pour faire tourner une direction de rayon (24) des impulsions lumineuses émises (22) autour d'un axe de rotation (46) orienté transversalement à la direction de rayon (24),
avec un détecteur (50) pour détecter des impulsions lumineuses (26) qui sont réfléchies par des objets (10) présents dans la zone de surveillance (12), avec un boîtier (60) pour séparer un intérieur (68) du capteur de l'environnement avec une plaque séparatrice (66) qui est transparente pour les impulsions lumineuses émises (22) et les impulsions lumineuses renvoyées (26),
avec un dispositif de test (54, 80, 52) pour vérifier une transparence optique de la plaque séparatrice (66) et
avec une unité (90) de commande et d'analyse pour commander la source lumineuse (20), pour analyser les impulsions lumineuses (26) détectées par le détecteur (50) et pour déterminer une distance de l'objet sur la base d'un temps de vol mesuré d'impulsions lumineuses (22, 26), dans lequel l'unité (90) d'analyse et de commande coopère avec le dispositif de test (54, 80, 52),
***caractérisé***
***en ce que*** dans l'intérieur (68) du capteur se trouve, en tant que partie du dispositif de test, au moins un détecteur de test (52) qui est placé sur un rotor (40) pouvant tourner autour de l'axe de rotation (46),
***en ce que*** le détecteur de test (52) est dirigé vers des zones de passage (61, 62, 64) de la plaque séparatrice (66) à travers lesquelles sortent les impulsions lumineuses émises (22) et/ou les impulsions lumineuses réfléchies (26),
***en ce que**,* pour fournir la lumière de test (53), il est prévu, comme autre partie du dispositif de test, une source lumineuse de test (54) qui est également placée sur le rotor (40),
***en ce* qu'**en dehors du boîtier (60) est placé au moins un élément réflecteur (80) vers lequel est dirigée la lumière de test (53), et
***en ce que*** le détecteur de test (52) est positionné pour détecter la lumière de test (55) renvoyée par l'élément réflecteur (80).

2. Capteur selon la revendication 1,
***caractérisé***
***en ce que*** la lumière de test (53) sort de l'intérieur (68) du capteur vers l'extérieur à travers la plaque séparatrice (66) dans une première zone (64) et
***en ce que*** la lumière de test (55) réfléchie par l'élément réflecteur (80) rentre de l'extérieur dans l'intérieur (68) du capteur à travers la plaque séparatrice (66) dans une deuxième zone (62) différente de la première zone (64).

3. Capteur selon la revendication 1 ou 2,
***caractérisé***
***en ce que*** la source lumineuse de test (54) est agencée pour un fonctionnement pulsé.

4. Capteur selon l'une quelconque des revendications 1 à 3,
***caractérisé***
***en ce que*** l'élément réflecteur (80) comprend un miroir de forme annulaire.

5. Capteur selon l'une quelconque des revendications 1 à 4,
***caractérisé***
***en ce que*** l'élément réflecteur (80) est un profilé annulaire (82) de section triangulaire, en particulier en matière plastique transparente.

6. Capteur selon l'une quelconque des revendications 1 à 5,
***caractérisé***
***en ce que*** l'élément réflecteur (80) est monté sous une collerette (63) du boîtier (60).

7. Capteur selon l'une quelconque des revendications 1 à 6,
***caractérisé***
***en ce que*** des moyens sont présents pour élargir un rayon de la source lumineuse de test (54).

8. Capteur selon l'une quelconque des revendications 1 à 7,
***caractérisé***
***en ce que*** la source lumineuse (20), le détecteur (50), un composant électronique (92) qui fait partie de l'unité de commande et d'analyse (90) et un miroir (28) destiné à envoyer les impulsions lumineuses réfléchies (26) sur le détecteur (50) sont agencés pour tourner en commun sur le rotor (40).

9. Capteur selon la revendication 8,
***caractérisé***
***en ce que*** le miroir (28) est un miroir creux (28), en particulier un miroir parabolique.

10. Capteur selon la revendication 8 ou 9,
***caractérisé***
***en ce que*** le miroir (28) est une pièce moulée en matière plastique (27) munie d'un revêtement (29).

11. Capteur selon la revendication 10,
***caractérisé***
***en ce que*** dans la pièce moulée en matière plastique (27) sont formés des logements dans lesquels sont reçus la source lumineuse (20), le détecteur (50), la source lumineuse de test (54), le détecteur de test (52) et/ou le composant électronique (92).

12. Capteur selon l'une quelconque des revendications 1 à 11,
***caractérisé***
***en ce que*** sur le rotor (40) est placé un aimant permanent (48) qui peut être entraîné par des bobines (38) placées sur un stator (30).

13. Capteur selon la revendication 12,
***caractérisé***
***en ce* qu'**entre le stator (30) et le rotor (40) se trouve une ligne de transformateurs (72, 74) pour transmettre de l'énergie du stator (30) au rotor (40).

14. Capteur selon la revendication 12 ou 13,
***caractérisé***
***en ce que***, pour transmettre des données du rotor (40) au stator (30), une ligne de transmission optique (76, 78) est formée entre rotor (40) et stator (30), en particulier sur l'axe de rotation (46).

15. Capteur selon l'une quelconque des revendications 1 à 14,
***caractérisé***
***en ce qu*'**une pluralité de détecteurs de test et/ou une pluralité de sources lumineuses de test associées sont présentes, en particulier du côté opposé du rotor (40).
